# EUROPEAN PATENT APPLICATION

(11) **EP 1 038 594 A1**
(43) Date of publication of application: **27.09.2000**
(21) Application number: 99105819.9
(22) Date of filing: 23.03.1999
(51) Int. Cl.: B05D 1/04, C09D 191/00

(54) **Method of surface treatment of an object by spraying with a treatment liquid**

(71) Applicant: Nielsen, Peter Damgaard, Queensway Quay (GI)
(72) Inventor: Nielsen, Peter Damgaard, Queensway Quay (GI)
(74) Representative: Roerboel, Leif

(57) **Abstract**

In a method of surface treatment of an object by spraying with a treatment liquid, based on an oil, dried and/or hardened by oxidation and/or polymerization (e.g. linseed oil),
said spraying comprising:
a) atomizing the treatment liquid to fine droplets,
b) electrostatically charging the droplets,
c) conveying the droplets onto the object to be treated by means of an air flow in combination with an electrostatic field,
d) oven-hardening/-drying the treated object, and
e) repeating steps a) - d) a number of times, possibly using treatment liquids with different compositions,
the drying time can be reduced substantially, down to approximately 1/10 to 1/20 of the traditionally experienced drying times.

The method provides a possibility of using linseed oil-based paints industrially and such paints without additives as e.g. siccatives, solvents, etc. usually used to speed up the drying.

## Description

### TECHNICAL FIELD

The present invention relates to a method of surface treatment of an object by spraying with a treatment liquid. More specifically, the invention relates to such a method, in which it is possible to use a treatment liquid based on linseed oils or similar materials, which are dried or hardened by oxidation and possibly polymerisation, said method comprising spraying the treatment liquid. Until now, it has been considered impossible to use such materials in connection with spraying.

### PRIOR ART

Linseed oil and similar vegetable oil materials have been used for centuries for surface treatment of wood and wooden elements, but also for surface treatment of other materials. Linseed oil-based paint was the most commonly used type of paint until approximately 1950 in Scandinavia and most parts of Europe.

One primary disadvantage of linseed oil-based paint is the long drying times involved. The drying time for a surface treatment is dependent on the number of layers of paint. The normal drying time for one treatment is 1-2 days for each layer, resulting in a normal surface treatment consisting of 3-4 layers lasting up to 8 days, and this is the primary reason for not using this type of paint industrially, where it is not acceptable to have drying times of between 24 hours and 7-8 days. Many attempts have been made to reduce the drying time, such as by adding siccatives, solvents and other additives, but also by mechanically adding oxygen under pressure, where the adding of oxygen has been very unsuccessful so far. However, many of these additives have unacceptable unhealthy properties, which in the 1950'ies led to almost total abandonment of this type of paint.

In connection with maintenance of preserved houses, it has, however, been mandatory, at least in Denmark, to use linseed oil-based paint due to the unsurpassed quality of such treatment. On an industrial basis, the long drying times have, however, been unacceptable and quick-drying paints of plast and alkyd type have totally taken over in this area. These types of paint do not protect wood in a corresponding way as linseed oil-based paints. It has thus been found that e.g. windows painted with water- or solvent-based paints, so-called plast, alkyd or acrylic paints, often show rot within 10-20 years.

Different types of spraying apparatus have been known for many years and have with success been used to spray many different types of paint and coating materials. Attempts to use such spraying apparatus for linseed oil-based paints have all been unsuccessful and resulted in wrinkling of the surface layer of the paint and unacceptable drying times.

### DISCLOSURE OF THE INVENTION

Based on the above knowledge, it is the object of the present invention to provide a method of surface treatment of an object, e.g. a wooden object, by spraying with a treatment liquid, in which the treatment liquid is based on an oil, dried and/or hardened by oxidation and/or polymerisation, e.g. linseed oil. By performing the spraying in accordance with claim 1, it is surprisingly possible to use a paint based on linseed oil and to achieve short drying times. This is due to the fact that the application of very thin layers can be controlled in a precise manner and the very fine droplets being kept separate until they hit the surface due to the electrostatic charging, whereby the large surface area created by atomizing is maintained and provides a possibility of pre-oxidizing the oil during transit from the spraying gun to the object to be treated. The electrostatic charging of the droplets reduces the surface tension and keep the individual droplets separated avoiding agglomeration, thereby drastically increasing the degree of atomizing, surface area, oxidizing and thus the drying. Moreover, the resulting surfaces have shown a very high quality which indicates that polymerisation also takes place in this process in connection with the electrostatically charged particles and the impact with the object to be treated.

Preferred embodiments, the advantages of which will be evident from the following detailed description, are revealed in the sub-ordinate claims 2-8.

### DESCRIPTION OF THE PREFERRED EMBODIMENTS

In the preferred embodiment of the method in accordance with the invention, the treatment liquid is based on linseed oil which is dried and hardened by oxidization and polymerisation. The object to be treated is sprayed with the treatment liquid in very thin layers several times ensuring drying and hardening of the several layers in-between each spraying. The treatment liquid is atomized into fine droplets and electrostatically charged by means of a spraying gun of known construction, and the droplets are conveyed onto the objects to be treated by means of an airflow and an electrostatic field between the spraying gun and the object to be treated. After each spraying, the object is subjected to hardening and drying in an oven with controlled temperature and humidity. In a preferred embodiment, six layers of treatment liquid is sprayed onto the object to be treated, although more or fewer layers may be provided in dependence on the characteristics of the object to be treated. The atomizing of the treatment liquid is performed mechanically using a high-speed rotating atomizer, e.g. as known from EP-890,391.

The method is preferably performed using a computer-controlled system for controlling process parameters such as the level of atomizing the treatment liquid, i.e. controlling the size of the droplets, the electrostatic charging of the droplets, the airflow for conveying the droplets from the spraying gun onto the object to be treated, the electrostatic field for conveying the droplets, the amount of treatment liquid added per m², the number of layers to be sprayed onto the object, the temperature, humidity, ventilation, etc., for the oven and the spraying box, and other parameters possibly influencing the treatment. The computer-controlled system may also comprise a scanner for scanning the topology of the object to be treated and for controlling the spraying pattern in accordance with said topology.

By using the method in accordance with the invention it has been shown that no siccatives or other additives are needed for providing a fast drying time, which with said method can be brought down to between 1/10 and 1/20 of the traditionally experienced drying time and this is achieved without using any kind of solvents or siccatives at all. The treatment liquid preferably comprises cold-pressed linseed oil and boiled linseed oil and possibly pigmentation, chalk and fungicides, when this is considered necessary.

The invention provides a possibility of treating e.g. a window on an industrial basis with linseed oil paint, said treatment consisting of several layers of surface treatment can be brought down to a total drying time of between 8 and 24 hours, whereas the corresponding traditional surface treatment consisting of several layers has until now lasted up to 10-12 days, using traditional methods for linseed oil painting. Furthermore, the invention makes it possible to use linseed oil-based paint without additives such as siccatives which are normally considered poisonous and carcinogenic. Furthermore, the adhesion and strength of the paint is considerably improved compared to the traditionally applied linseed oil paints.

It is preferred that the different layers sprayed onto the object comprise different amounts of cold-pressed linseed oil and boiled linseed oil and possibly also different amounts of pigmentation and chalk. When treating wooden objects, the first layers will normally be provided using a relatively lean linseed oil paint and the last layers using a relatively fat linseed oil paint.

## Claims

1. Method of surface treatment of an object by spraying with a treatment liquid, **characterized** by said treatment liquid being based on an oil, dried and/or hardened by oxidation and/or polymerization (e.g. linseed oil),
and said spraying comprising:
a) atomizing the treatment liquid to fine droplets,
b) electrostatically charging the droplets,
c) conveying the droplets onto the object to be treated by means of an air flow in combination with an electrostatic field,
d) oven-hardening/-drying the treated object, and
e) repeating steps a) - d) a number of times, possibly using treatment liquids with different compositions.

2. Method in accordance with claim 1, **characterized** by the atomizing comprising mechanically splitting the treatment liquid up into fine droplets.

3. Method in accordance with claim 2, **characterized** by the mechanically splitting being performed by means of a high-speed rotating atomizer.

4. Method in accordance with any of the preceding claims, **characterized** by the treatment liquid only comprising said oils and additives selected from
i) pigmentation,
ii) chalk, and
iii) fungicides.

5. Method in accordance with any of the preceding claims, **characterized** by comprising the controlling of process parameters selected from:
I) atomizing, i.e. size of droplets,
II) electrostatic charging of droplets,
III) airflow for conveying droplets,
IV) electrostatic field for conveying droplets,
V) amount of treatment liquid per m²,
VI) spraying pattern in dependence of topology of the object to be treated, and
VII) composition of the paint and treatment sequence in dependence of parameters of the object to be treated, such as porosity, specific gravity, etc. of the wood, and
VIII) temperature, humidity, ventilation, etc. of oven and spraying box, all in dependence of parameters of the object to be treated.

6. Method in accordance with claim 6, **characterized** by comprising the use of a computer system for controlling said parameters.

7. Method in accordance with any of the preceding claims, **characterized** by the treatment liquid comprising cold-pressed linseed oil and boiled linseed oil as main constituents.

8. Method in accordance with any of the preceding claims, **characterized** by the number of times of repeating steps a) - d) being greater than two, preferably equal to five to six.
